# EUROPÄISCHE PATENTANMELDUNG

(11) **EP 1 293 364 A2**
(43) Veröffentlichungstag der Anmeldung: **19.03.2003**
(21) Anmeldenummer: 02015137.9
(22) Anmeldetag: 06.07.2002
(51) Int. Cl.: B60G 7/00

(54) **Querlenker einer Radaufhängung**

(30) Priorität: 16.08.2001 DE 10140288
(71) Anmelder: Thyssen Krupp Automotive AG, 44793 Bochum (DE)
(72) Erfinder: Runte, Klaus, Dipl.-Ing., 33615 Bielefeld (DE); Wächter, Udo, Dipl.-Ing., 33613 Bielefeld (DE); Kröger, Matthias, Dipl.-Ing., 32479 Hille (DE)

(57) **Zusammenfassung**

Um einen Querlenker (2) in Doppelschalen-Blechausbildung für die Vorderradanbindung bei einem Kraftfahrzeug mit zwei etwa in Fahrtrichtung hintereinander liegenden Anlenkpunkten (3, 4) an das Chassis, die eine horizontale Kippachse (5) für den Querlenker (2) bilden und einem Anbindungspunkt (8) für die Radaufhängung einfacher und damit preiswerter zu gestalten, ist wenigstens einer der Anlenkpunkte (3, 4) als ein in ein Lager eingreifender Sechskant (11) mit Sechskanthälften (18, 19), die Teil der Schalen (14, 15) des Querlenkers (2) sind, ausgebildet.

## Beschreibung

Die Erfindung betrifft einen Querlenker in Doppelschalen-Blechausbildung für die Vorderradanbindung bei einem Kraftfahrzeug nach dem Oberbegriff des Anspruchs 1.

Querlenker dienen zum Anbinden und Führen des Vorderrades an das Chassis, speziell bei einer Vorderradaufhängung mit Mc Pherson-Federbeinen. Diese Querlenker sind üblicherweise über zwei in Fahrtrichtung hintereinander liegende Anlenkpunkte an das Chassis angebunden und weisen einen Anbindungspunkt für die eigentliche Radaufhängung auf.

Es ist bekannt, derartige Querlenker in einschaliger oder doppelschaliger Blechausbildung aus Stahl herzustellen. Es ist aber auch bekannt, Querlenker aus Guss, vorzugsweise aus Aluminium, herzustellen.

An die Querlenker werden vorzugsweise als separate Teile die Anlenkpunkte an das Chassis und der Anbindungspunkt für die Radaufhängung angebracht. Dabei ist es auch bekannt, einen Anlenkpunkt an das Chassis als separat ausgebildeten Sechskant zu verwenden, der vorzugsweise in ein Gummimetall-Lagergehäuse eingreift. Nachteilig bei den bekannten Ausbildungen von Querlenkern sind diese äußerst arbeitsaufwendig herzustellen und müssen, um auch die Toleranzen der Anbauteile ausgleichen zu können, eine hohe Genauigkeit aufweisen.

Der Erfindung liegt die Aufgabe zugrunde, einen Querlenker der gattungsgemäßen Art einfacher und damit preiswerter zu gestalten. Diese Aufgabe wird durch einen Querlenker mit den Merkmalen des Anspruchs 1 gelöst. Vorteilhafte Aus- und Weiterbildungen sind in den Ansprüchen 2 bis 13 beschrieben.

Die erfindungsgemäße Lösung weist den Vorteil auf, dass ein Anlenkteil direkt ein Teil des Querlenkers ist, ohne dass es als separates Bauteil erst mit dem Grundkörper des Querlenkers verbunden werden muss. Diese Ausbildung weist nicht nur Kostenvorteile auf. Durch das Fehlen der Verbindungskonstruktion werden auch noch Festigkeitsvorteile erzielt.

Bei der Ausbildung nach den Ansprüchen 2 oder 3 wird es vorteilhaft möglich, hohe am Sechskant angreifende Biegekräfte zu übertragen, ohne dass die Schalen des Querlenkergrundteils mit erhöhter Wandstärke ausgebildet werden müssen. Das bringt vorteilhaft eine Gewichtsreduzierung, die nicht nur zu Kostenvorteilen führt, sondern auch die ungefederten Massen der Radaufhängung reduziert.

Ein Ausführungsbeispiel der Erfindung ist in der Zeichnung dargestellt und wird nachfolgend näher beschrieben. Es zeigen
Fig. 1 eine perspektivische Darstellung einer Vorderradanbindung,
Fig. 2 eine räumliche Darstellung des Querlenkers,
Fig. 3 eine vergrößerte Darstellung des hinteren Anlenkpunktes des Querlenkers und
Fig. 4 eine Darstellung des Querlenkers vor dem Zusammenbau als Explosionsdarstellung.

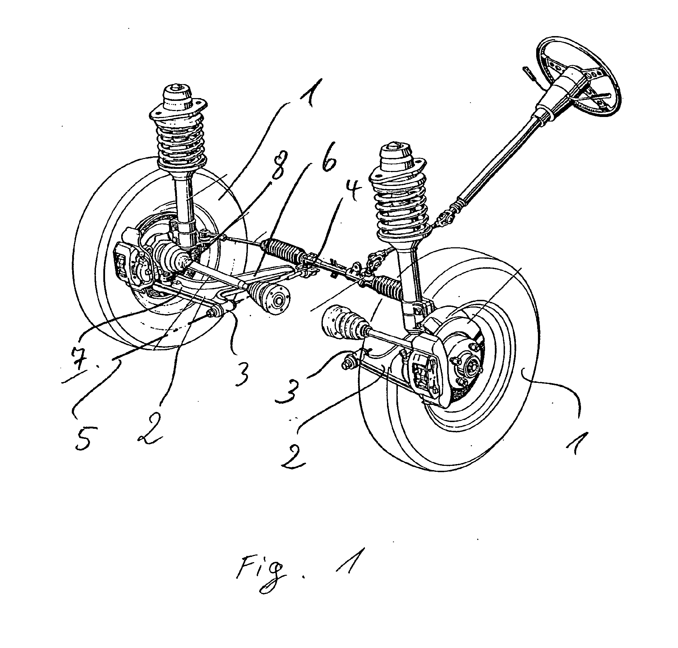

Fig. 1 zeigt den systematischen Aufbau einer Vorderradaufhängung mit Mc Pherson-Federbeinen. Das Chassis und die Motorkonstruktion sind nicht dargestellt.

Die einzeln aufgehängten Räder 1 müssen höhenbeweglich, aber horizontal geführt am nicht dargestellten Chassis befestigt sein. Hierzu dient u.a. der Querlenker 2. Der Querlenker 2 ist über zwei in Fahrtrichtung hintereinander liegende Anlenkpunkte 3, 4 am Chassis angebunden. Die Anlenkpunkte 3, 4 dienen dazu, den Querlenker 2 um eine Kippachse 5 schwenkbar am Chassis anzubinden. Der Querlenker 2 hat eine etwa L-förmige flache Form, wobei ein Schenkel 6 die Anlenkpunkte 3, 4 verbindet und der hiervon abstehende Schenkel 7 den Anbindungspunkt 8 trägt.

Fig. 2 zeigt einen Querlenker 2 zum Anbinden des linken Vorderrades. Der vordere Anlenkpunkt 3 wird über ein in einen Stift 9, der vorzugsweise als Gewindestift ausgebildet ist, auslaufendes Kugelgelenk 10 am Chassis angebunden. Der hintere Anlenkpunkt 4 ist als fingerförmiger Sechskant 11 mit gleich bleibendem Querschnitt ausgebildet. Zum Anbinden der eigentlichen Radaufhängung am Anbindungspunkt 8 dient im Ausführungsbeispiel ein weiteres Kugelgelenk 12, das ebenfalls in einem Stift 13 zum Verbinden ausläuft.

Das die beiden Schenkel 6, 7 aufweisende Grundteil des Querlenkers 2 wird aus zwei übereinander liegende Schalen 14, 15 gebildet. Diese Schalen 14, 15 werden mindestens an ihren Außenkonturen und wenigstens abschnittsweise miteinander verschweißt. Dadurch, dass die Schalen 14, 15 Prägeteile sind, bilden sich zumindest bereichsweise Hohlkörperstrukturen. Im Mittelbereich des Querlenkers sind aus Gewichtsersparnisgründen Durchbrüche 16, 17 vorgesehen.

Der fingerförmig ausgebildete Sechskant 11 ist integraler Bestandteil des Grundteils des Querlenkers 2. Die Sechskanthälften 18, 19 sind als Teile der Schalen 14, 15 mit diesen zusammen aus einem Blech hergestellt. Durch eine entsprechende Prägung der Sechskanthälften 18, 19 wird der sechseckige hohle Querschnitt erzeugt. Montageschrägen 20 werden gleichzeitig mit dem Stanz- und Prägearbeitsgang zum Herstellen der Schalen 14, 15 an die Sechskanthälften 18, 19 angeformt.

Zur gezielten Festigkeits- und Steifigkeitserhöhung wird im Bereich der Teilungsebene 21 zwischen den aufeinander liegenden Schalen 14, 15 und demgemäß auch der Sechskanthälften 18, 19 ein Verstärkungsteil 22 eingelegt. Im Ausführungsbeispiel ist das Verstärkungsteil 22 ebenfalls als Blech hergestellt und weist eine Außenkontur entsprechend der Außenkontur des Sechskants 11 und des angrenzenden Bereichs des Querlenkers 2 auf. Das Verstärkungsteil erstreckt sich etwa über die **1** ½-fache Länge des Sechskants 11 in den Schenkel 6 des Querlenkers 2. Zur Aufnahme des Verstärkungsteils 22 sind die Schalen 14, 15 mit Ausklinkungen versehen, die insgesamt der Dicke des Verstärkungsteils 22 entsprechen.

Zum Anbinden des hinteren Anlenkpunktes 4 an das Chassis wird der fingerförmige Sechskant 11 in eine Innenaufnahme eines nicht dargestellten Gummimetallelements eingebracht. Dieses Gummimetallelement wird dann am Chassis befestigt.

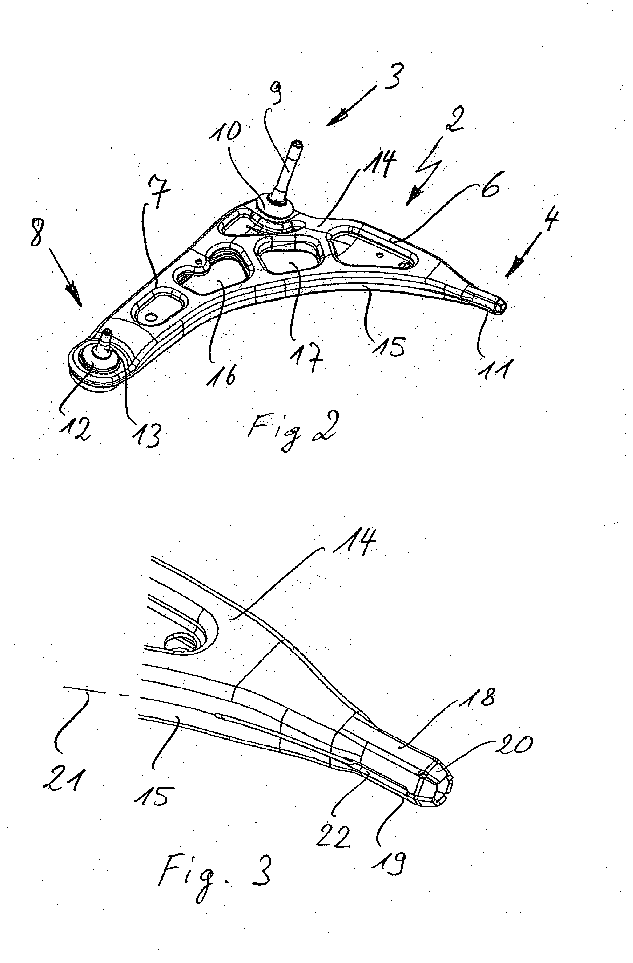

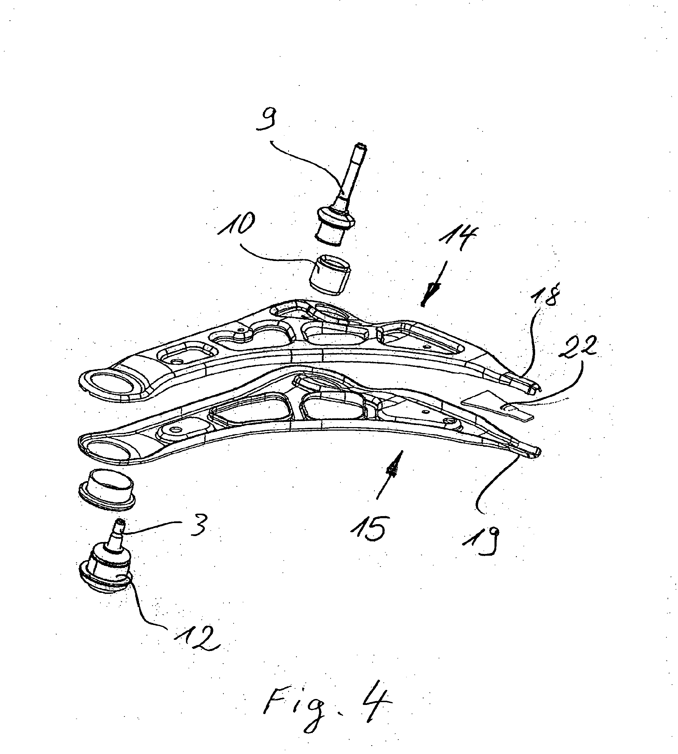

In Fig. 4 sind nochmals alle Einzelteile des Querlenkers 2 entsprechend den Fig. 2 und 3 als Explosionsdarstellung dargestellt. Die Darstellung zeigt die Ausbildung der Teile vor dem Verschweißen der Schalen 14, 15 miteinander und mit dem Verstärkungsteil 22.

Alternativ zum Verschweißen der Schalen 14, 15 und des Verstärkungsteils 22 können diese Teile auch miteinander verklebt sein. Sowohl Schalen als auch Verstärkungsteil müssen nicht aus einem Metallwerkstoff hergestellt sein. Sie können in gleicher Weise beispielsweise aus Aluminium oder Kunststoff bestehen. Es bietet sich auch an, die Hohlräume zwischen den Schalen 14, 15 mit Kunststoff zu füllen. Wenn beispielsweise der Hohlraum zwischen den Sechskanthälften 18, 19 und der angrenzende Hohlraum des Schenkels 6 mit einem faserverstärkten Kunststoff ausgegossen wird, kann in verschiedenen Einsatzfällen auf die Einbringung eines Verstärkungsteils 22 verzichtet werden.

In besonderen Anwendungsfällen können die Schalen 14, 15 des Querlenkers 2 nicht nur in Teilbereichen, wie beispielsweise an den Sechskanthälften 18, 19, eine symmetrische Form aufweisen, sondern auch über ihren gesamten Bereich. Dann kann der Querlenker 2 sowohl für das linke Rad als auch für das rechte Rad verwendet werden.

### Bezugszeichenliste

- 1.: Rad
- 2.: Querlenker
- 3.: Anlenkpunkt
- 4.: Anlenkpunkt
- 5.: Kippachse
- 6.: Schenkel
- 7.: Schenkel
- 8.: Anbindungspunkt
- 9.: Stift
- 10.: Kugelgelenk
- 11.: Sechskant
- 12.: Kugelgelenk
- 13.: Stift
- 14.: Schale
- 15.: Schale
- 16.: Durchbruch
- 17.: Durchbruch
- 18.: Sechskanthälfte
- 19.: Sechskanthälfte
- 20.: Montageschräge
- 21.: Teilungsebene
- 22.: Verstärkungsteil

## Patentansprüche

1. Querlenker (2) in Doppelschalen-Blechausbildung für die Vorderradanbindung bei einem Kraftfahrzeug mit zwei etwa in Fahrtrichtung hintereinander liegenden Anlenkpunkten ( 3, 4) an das Chassis, die eine horizontale Kippachse (5) für den Querlenker (2) bilden und einem Anbindungspunkt (8) für die Radaufhängung, **dadurch gekennzeichnet, dass** wenigstens einer der Anlenkpunkte (3, 4) als ein in ein Lager eingreifender Sechskant (11) mit Sechskanthälften (18, 19), die Teil der Schalen (14, 15) des Querlenkers (2) sind, ausgebildet ist.

2. Querlenker (2) nach Anspruch 1, **dadurch gekennzeichnet, dass** im Hohlraum des Sechskants (11) ein Verstärkungsteil (22) angeordnet ist.

3. Querlenker (2) nach Anspruch 2, **dadurch gekennzeichnet, dass** sich das Verstärkungsteil (22) bis in den Querlenker (2) erstreckt.

4. Querlenker (2) nach Anspruch 2 oder Anspruch 3, **dadurch gekennzeichnet, dass** das Verstärkungsteil (22) den Hohlraum des Sechskants (11) und/oder des angrenzenden Querlenkerbereichs etwa formschlüssig nahezu oder ganz ausfüllt.

5. Querlenker (2) nach Anspruch 2 oder Anspruch 3, **dadurch gekennzeichnet, dass** das Verstärkungsteil (22) aus Blech besteht und etwa an der Teilungsebene (21) der Schalen angeordnet ist.

6. Querlenker (2) nach Anspruch 5, **dadurch gekennzeichnet, dass** die Außenkontur des Verstärkungsteils (22) etwa der Außenkontur des Sechskants (11) und/oder des hieran angrenzenden Querlenkerbereichs entspricht und dass eine oder beide Sechskanthälften (18, 19) und/oder Schalen (14, 15) mit einer Ausklinkung entsprechend der Dicke des Verstärkungsteils (22) versehen sind.

7. Querlenker (2) nach einem oder mehreren der Ansprüche 2 bis 6, **dadurch gekennzeichnet, dass** die Schalen (14, 15) des Querlenkers (2) und das Verstärkungsteil (22) aus einem ähnlichen Material bestehen.

8. Querlenker (2) nach einem oder mehreren der Ansprüche 2 bis 7, **dadurch gekennzeichnet, dass** die Schalen (14, 15) des Querlenkers (2) und das Verstärkungsteil (22) aus einem Eisenwerkstoff bestehen.

9. Querlenker (2) nach einem oder mehreren der Ansprüche 1 bis 8, **dadurch gekennzeichnet, dass** die Schalen (14, 15) miteinander und/oder mit dem Verstärkungsteil (22) verschweißt sind.

10. Querlenker (2) nach einem oder mehreren der Ansprüche 1 bis 8, **dadurch gekennzeichnet, dass** die Schalen (14, 15) miteinander und/oder mit dem Verstärkungsteil (22) verklebt sind.

11. Querlenker (2) nach einem oder mehreren der Ansprüche 2 bis 10, **dadurch gekennzeichnet, dass** der verbleibende Hohlraum zwischen den Schalen (14, 15) mit Kunststoff ausgefüllt ist.

12. Querlenker (2) nach Anspruch 1, **dadurch gekennzeichnet, dass** der Hohlraum zwischen den Schalen (14, 15) und den Sechskanthälften (18, 19) mit Kunststoff ausgefüllt ist.

13. Querlenker (2) nach einem oder mehreren der Ansprüche 1 bis 12, **dadurch gekennzeichnet, dass** die Schalen (14, 15) des Querlenkers (2) eine symmetrische Form aufweisen.
